# EUROPEAN PATENT APPLICATION

(11) **EP 3 733 452 A1**
(43) Date of publication of application: **04.11.2020**
(21) Application number: 18893358.4
(22) Date of filing: 07.12.2018
(51) Int. Cl.: B60Q 1/24, B60Q 1/04

(54) **VEHICLE LAMP SYSTEM, VEHICLE LAMP CONTROL DEVICE, AND VEHICLE LAMP CONTROL METHOD**

(30) Priority: 27.12.2017 JP 2017252005
(71) Applicant: KOITO MANUFACTURING CO., LTD., Minato-ku Tokyo 108-8711 (JP)
(72) Inventor: YAMAMURA, Satoshi, Shizuoka-shi Shizuoka 424-8764 (JP); NAKADA, Yusuke, Shizuoka-shi Shizuoka 424-8764 (JP); TOYOSHIMA, Takanobu, Shizuoka-shi Shizuoka 424-8764 (JP)
(74) Representative: Algemeen Octrooi- en Merkenbureau B.V.
(86) International application number: PCT/JP2018/045058
(87) International publication number: WO 2019/131055

(57) **Abstract**

This vehicle lamp system (1) comprises: an imaging unit (12) that captures an image of an area forward of a vehicle; a brightness analysis unit (14) that detects the brightness of each of a plurality of individual areas ranged forward of the vehicle on the basis of the information obtained from the imaging unit (12); a light intensity setting unit (42) that defines the intensities of light to project onto each individual area on the basis of the detection result of the brightness analysis unit (14); a light source unit (10) capable of independently adjusting the intensity of light to project onto each of the plurality of individual areas; and a light source control unit (20) that controls the light source unit (10) on the basis of the light intensity defined by the light intensity setting unit (42). The light intensity setting unit (42) detects a high-brightness area and a low-brightness area adjacent to each other on the basis of the detection result of the brightness analysis unit (14), and accentuates the boundary between the high-brightness area and the low-brightness area by setting the light intensity so as to increase the difference in brightness between the edge on the high-brightness side and the edge on the low-brightness side along the boundary.

## Description

### [TECHNICAL FIELD]

The present invention relates to vehicle lamp systems, controllers for vehicle lamps, and methods of controlling vehicle lamps, and, in particular, to a vehicle lamp system, a controller for vehicle lamps, and a method of controlling vehicle lamps used in automobiles, etc.

### [BACKGROUND ART]

In recent years, vehicle lamps capable of forming a variety of light distribution patterns are known. For example, patent literature 1 discloses a technology of forming a light distribution pattern by using a digital mirror device (DMD) including an array of a plurality of small mirrors. Further, patent literature 2 discloses a technology of forming a light distribution pattern by using a scanning optical system for scanning a space in front of the driver's vehicle with the light of a light source. Further, patent literature 3 discloses a technology of forming a light distribution pattern by using an LED array.
[Patent Literature 1] JP2015-064964
[Patent Literature 2] JP2012-227102
[Patent Literature 3] JP2008-094127

### [SUMMARY OF INVENTION]

### [TECHNICAL PROBLEM]

According to ADB control mentioned above, it is possible to improve viewability for the driver of the driver's vehicle, while also avoiding glare experienced in an oncoming vehicle. Improvement in viewability allows the driver to recognize an obstacle ahead more properly and so improves the safety of driving. Meanwhile, there is an unending demand for improvement of the safety of driving.

The present invention addresses the above-described issue, and a purpose thereof is to provide a technology of improving the safety of driving.

### [SOLUTION TO PROBLEM]

An embodiment of the present invention relates to a vehicle lamp system. The system includes: an imaging unit that images a scene in front of a driver's vehicle; a brightness analyzer that detects a brightness of each of a plurality of individual areas arranged in front of the driver's vehicle, based on information obtained from the imaging unit; an illuminance setting unit that defines an illuminance value of light to illuminate each individual area, based on a detection result of the brightness analyzer; a light source unit capable of adjusting an illuminance of light to illuminate each of the plurality of individual areas independently; and a light source controller that controls the light source unit based on the illuminance value defined by the illuminance setting unit. The illuminance setting unit detects a high-brightness area and a low-brightness area adjacent to each other based on the detection result of the brightness analyzer and sets the illuminance value to increase a brightness difference between a high-brightness edge portion and a low-brightness edge portion along a boundary between the high-brightness area and the low-brightness area, thereby enhancing the boundary. According to this embodiment, the safety of driving can be improved.

In the above-described embodiment, the illuminance setting unit may set the illuminance value so that a brightness of the high-brightness edge portion is higher than a brightness of a high-brightness inward area in the high-brightness area more distanced from the boundary than the high-brightness edge portion. Further, in the above-described embodiment, the illuminance setting unit may set the illuminance value so that a brightness of the low-brightness edge portion is lower than a brightness of a low-brightness inward area in the low-brightness area more distanced from the boundary than the low-brightness edge portion. Further, in the above-described embodiment, the illuminance setting unit may set the illuminance value so that a brightness of the high-brightness edge portion is higher than a brightness of a high-brightness inward area in the high-brightness area more distanced from the boundary than the high-brightness edge portion and that a brightness of the low-brightness edge portion is lower than a brightness of a low-brightness inward area in the low-brightness area more distanced from the boundary than the low-brightness edge portion.

Another embodiment of the present invention relates to a controller for a vehicle lamp. The controller for a vehicle lamp includes: a brightness analyzer that detects a brightness of each of a plurality of individual areas arranged in front of a driver's vehicle; an illuminance setting unit that defines an illuminance value of light to illuminate each individual area, based on a detection result of the brightness analyzer; and a light source controller that controls a light source unit capable of adjusting an illuminance of light to illuminate each individual area independently, based on the illuminance value defined by the illuminance setting unit. The illuminance setting unit detects a high-brightness area and a low-brightness area adjacent to each other, based on a detection result of the brightness analyzer, and sets the illuminance value to increase a brightness difference between a high-brightness edge portion and a low-brightness edge portion along a boundary between the high-brightness area and the low-brightness area, thereby enhancing the boundary.

Another embodiment of the present invention relates to a method of controlling a vehicle lamp. The method of controlling includes: detecting a brightness of each of a plurality of individual areas arranged in front of a driver's vehicle; defining an illuminance value of light to illuminate each individual area, based on the brightness detected; and illuminating each individual area with light based on the illuminance value defined. In the defining of the illuminance value, a high-brightness area and a low-brightness area adjacent to each other are detected based on a result of detecting the brightness, and the illuminance value is set to increase a brightness difference between a high-brightness edge portion and a low-brightness edge portion along a boundary between the high-brightness area and the low-brightness area, thereby enhancing the boundary.

Optional combinations of the aforementioned constituting elements, and replacement of implementation of the present invention in the form of methods, devices, systems, etc. may also be practiced as optional modes of the present invention.

### [ADVANTAGEOUS EFFECTS OF INVENTION]

According to the present invention, the safety of driving can be improved.

### [BRIEF DESCRIPTION OF DRAWINGS]

Fig. 1 shows a schematic configuration of a vehicle lamp system according to an embodiment;
Fig. 2A is a front view showing a schematic configuration of the light reflector; Fig. 2B is an A-A cross-sectional view of the light deflector shown in Fig. 2A;
Fig. 3 schematically shows a scene in front of the driver's vehicle;
Fig. 4A is a schematic diagram showing brightness image data generated by the brightness analyzer;
Fig. 4B is a schematic diagram showing a boundary between a high-brightness area and a low-brightness area;
Figs. 5A and 5B are schematic diagrams for illustrating edge enhancement control according to the embodiment;
Figs. 6A and 6B are flowcharts showing an example of ADB control performed in the vehicle lamp system according to the embodiment;
Figs. 7A and 7B are schematic diagrams for illustrating edge enhancement control according to variation 1; and
Figs. 8A and 8B are schematic diagrams for illustrating edge enhancement control according to variation 2.

### [DESCRIPTION OF EMBODIMENTS]

Hereinafter, the invention will be described based on a preferred embodiment with reference to the accompanying drawings. The embodiment does not intend to limit the scope of the invention but exemplify the invention. Not all of the features and the combinations thereof described in the embodiments are necessarily essential to the invention. Identical or like constituting elements, members, processes shown in the drawings are represented by identical symbols, and a duplicate description will be omitted. The scales and shapes shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others.

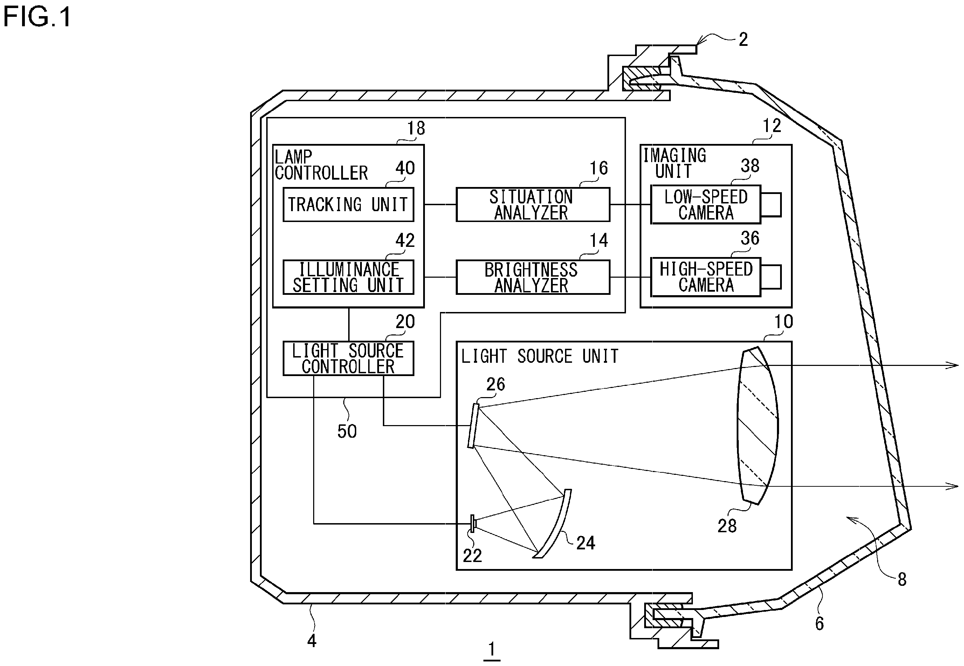

Fig. 1 shows a schematic configuration of a vehicle lamp system according to an embodiment. Fig. 1 depicts some of the constituting elements of a vehicle lamp system 1 as functional block. These functional blocks are implemented in hardware by a device or a circuit such as a CPU and a memory of a computer, and in software by a computer program, etc. It will be understood by those skilled in the art that the functional block may be implemented in a variety of manners by a combination of hardware and software.

The vehicle lamp system 1 is applied to a vehicle headlamp device including a pair of headlamp units provided left and right on the frontward side of the vehicle. Since the pair of headlamp units are of a practically identical structure except that they have horizontally symmetrical structures, Fig. 1 shows the structure of one of the headlamp units to exemplify a vehicle lamp 2.

The vehicle lamp 2 provided in the vehicle lamp system 1 includes a lamp body 4 having an opening on the frontward side of the vehicle and a translucent cover 6 attached to cover the opening of the lamp body 4. The translucent cover 6 is made of resin, glass, etc., which has translucency. In a lamp chamber 8 formed by the lamp body 4 and the translucent cover 6 are housed a light source unit 10, an imaging unit 12, and a controller 50.

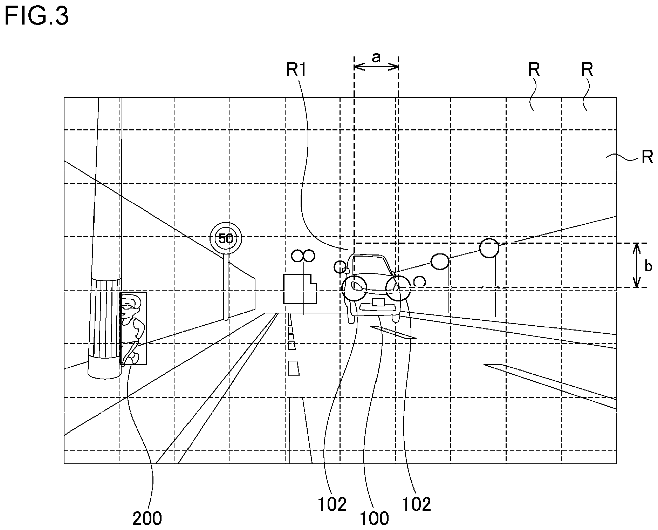

The light source unit 10 is a device capable of adjusting independently the illuminance (intensity) of light to illuminate each of a plurality of individual areas (see Fig. 3) arranged in front of the driver's vehicle. The light source unit 10 includes a light source 22, a reflective optical member 24, a light deflector 26, and a projective optical member 28. Each of the parts is mounted to the lamp body 4 by a support mechanism (not shown).

A semiconductor light emitting device such as a light emitting diode (LED), a laser diode (LD), and an electroluminescence (EL) device, etc., an electric bulb, an incandescent lamp (halogen lamp), a discharge lamp, or the like may be used as the light source 22.

The reflective optical member 24 is configured to guide the light output from the light source 22 to the reflecting surface of the light deflector 26. The reflective optical member 24 is comprised of a reflecting mirror having a reflecting inner surface. The reflective optical member 24 may be a solid light guide, or the like. Further, in the case the light output from the light source 22 can be guided to the light deflector 26 directly, the reflective optical member 24 need not be provided.

The light deflector 26 is provided on the light axis of the projective optical member 28 and is configured to selectively reflect the light output from the light source 22 toward the projective optical member 28. The light deflector 26 is comprised of, for example, a digital mirror device (DMD). In other words, the light deflector 26 is configured as an arrangement of a plurality of small mirrors in an array (matrix). By controlling the angle of the reflecting surface of each of the plurality of these small mirrors, the direction of reflection of light output from the light source 22 can be selectively changed.

In other words, the light deflector 26 can reflect a portion of the light output from the light source 22 toward the projective optical member 28 and reflect the other portion of the light in a direction in which the light is not effectively used by the projective optical member 28. The direction in which the light is not effectively used can be understood as a direction in which the light is incident on the projective optical member 28 but contributes little to formation of a light distribution pattern or a direction in which the light travels toward a light absorption member (light shielding member) (not shown).

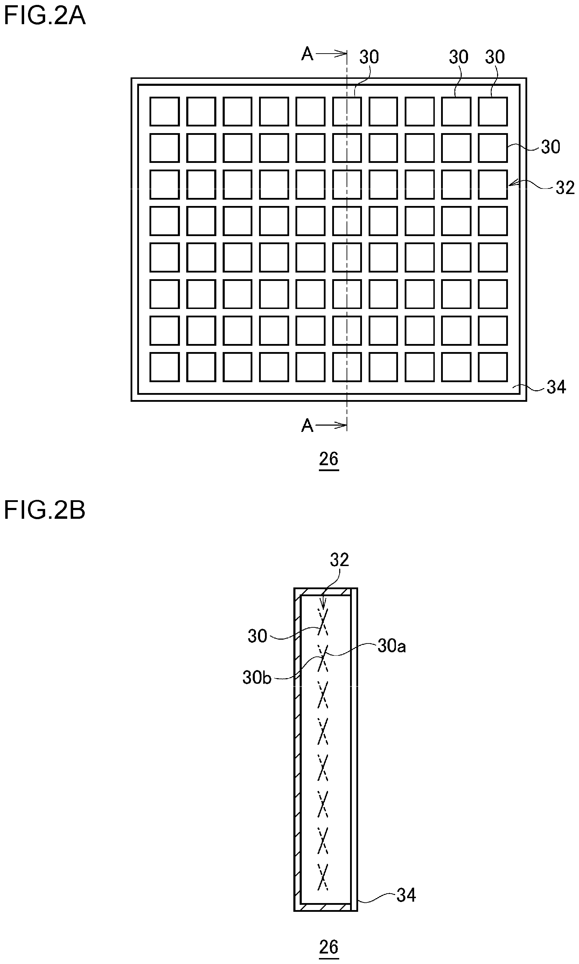

Fig. 2A is a front view showing a schematic configuration of the light reflector. Fig. 2B is an A-A cross-sectional view of the light deflector shown in Fig. 2A. The light deflector 26 includes a micromirror array 32 in which a plurality of small mirror elements 30 are arranged in a matrix, and a transparent cover member 34 provided in front (rightward in the light deflector 26 shown in Fig. 2B) of reflecting surfaces 30a of the mirror elements 30. For example, the cover member 34 is made of glass, plastic, etc.

The mirror element 30 is substantially square in shape and has a turning shaft 30b that substantially equally divides the mirror element 30 extending in the horizontal direction. Each mirror element 30 of the micromirror array 32 is configured to switch its position to the first reflection position (the position indicated by the solid line in Fig. 2B) or the second reflection position (the position indicated by the broken line in Fig. 2B). The first reflection position is a position in which the light output from the light source 22 is reflected toward the projective optical member 28 so as to be used as part of a desired light distribution pattern. The second reflection position is a position to prevent the light output from the light source 22 from being used effectively. Each mirror element 30 is turned around the turning shaft 30b and is individually switched between the first reflection position and the second reflection position. Each mirror element 30 occupies the first reflection position during an on period and occupies the second reflection position during an off period.

Fig. 3 schematically shows a scene in front of the driver's vehicle. As described above, the light source unit 10 includes a plurality of mirror elements 30 as individual illuminators capable of illuminating a space in front of the lamp in a mutually independent manner. The light source unit 10 can illuminate a plurality of individual areas R arranged in front of the driver's vehicle by means of the mirror elements 30. Each individual area R is an area corresponding to one pixel or a set of a plurality of pixels of an imaging unit 12, and, more specifically, a high-speed camera 36, for example. Further, the individual areas R are associated with the respective mirror elements 30 in this embodiment.

For convenience, Figs. 2A and 3 show the mirror elements 30 and the individual areas R in an array of 10 (horizontal)×8 (vertical), but the number of mirror elements 30 and individual areas R is not limited to any particular number. For example, the resolution of the micromirror array 32 (in other words, the number of mirror elements 30 and individual areas R) is 1000-300000 pixels. Further, the time required for the light source unit 10 to form one light distribution pattern is about 0.1-5 ms. In other words, the light source unit 10 can change the light distribution pattern every 0.1-5 ms.

As shown in Fig. 1, the projective optical member 28 is comprised of a free-form surface lens having a free-form frontward surface and a free-form backward surface. The projective optical member 28 projects an image of the light source formed on the back focal plane that includes the back focal point of the projective optical member 28 toward a space in front of the lamp as an inverted image. The projective optical member 28 is provided so that its back focal point is located on the light axis of the vehicle lamp 2 and near the reflecting surface of the micromirror array 32. The projective optical member 28 may be a reflector.

The light output from the light source 22 is reflected by the reflective optical member 24 and illuminates the micromirror array 32 of the light deflector 26. The light deflector 26 reflects the light toward the projective optical member 28 by means of a predetermined mirror element(s) 30 at the first reflection position. The reflected light is transmitted through the projective optical member 28, travels to a space in front of the lamp, and illuminates the individual areas R corresponding to the respective mirror elements 30. This forms a light distribution pattern of a predetermined shape in a space in front of the lamp.

The imaging unit 12 is a device that images a scene in front of the driver's vehicle. The imaging unit 12 includes a high-speed camera 36 and a low-speed camera 38. The high-speed camera 36 has a relatively high frame rate. For example, the frame rate is not lower than 200 fps and not higher than 10000 fps (0.1-5 ms per one frame). Meanwhile, the low-speed camera 38 has a relatively low frame rate. For example, the frame rate is not lower than 30 fps and not higher than 120 fps (8-33 ms per one frame). Further, the high-speed camera 36 has a relatively low resolution. For example, the resolution is not less than 300000 pixels and less than 5000000 pixels. Meanwhile, the low-speed camera 38 has a relatively high resolution. For example, the resolution is 5000000 pixels or more. The high-speed camera 36 and the low-speed camera 38 image all individual areas R. The resolution of the high-speed camera 36 and the low-speed camera 38 is not limited to the numerical value indicated above and can be set at an arbitrary value that meets the technical consistency.

The controller 50 includes a brightness analyzer 14, a situation analyzer 16, a lamp controller 18, and a light source controller 20. Image data acquired by the imaging unit 12 is sent to the brightness analyzer 14 and the situation analyzer 16.

The brightness analyzer 14 detects the brightness of each individual area R based on information (image data) obtained from the imaging unit 12. The brightness analyzer 14 is a high-speed low-precision analyzer that analyzes an image less precisely and outputs an analysis result at a higher speed than the situation analyzer 16. The brightness analyzer 14 of this embodiment detects the brightness of each individual area R based on information obtained from the high-speed camera 36. For example, the brightness analyzer 14 detects the brightness of each individual area R every 0.1-5 ms. The detection result of the brightness analyzer 14, i.e., a signal indicating brightness information on the individual area R is transmitted to the lamp controller 18.

The situation analyzer 16 detects a situation in front of the driver's vehicle based on information obtained from the imaging unit 12. For example, the situation analyzer 16 detects a target located in front of the driver's vehicle. The situation analyzer 16 is a low-speed high-precision analyzer that analyzes an image more precisely and outputs an analysis result at a lower speed than the brightness analyzer 14. The situation analyzer 16 of this embodiment detects a situation in front of the driver's vehicle based on information obtained from the low-speed camera 38. For example, the situation analyzer 16 detects the situation every 50 ms. The target detected by the situation analyzer 16 is exemplified by an oncoming vehicle 100, a pedestrian 200, etc., as shown in Fig. 3. The target may also be a vehicle ahead, an obstacle to the driving of the driver's vehicle, a road sign, a road marker, a road shape, etc.

The situation analyzer 16 can detect the target by using a method publicly known in the art, including algorithm recognition, deep learning, etc. For example, the situation analyzer 16 maintains a characteristic point indicating the oncoming vehicle 100. In the case the image data of the low-speed camera 38 includes data that includes characteristic points indicating the oncoming vehicle 100, the situation analyzer 16 recognizes the position of the oncoming vehicle 100. The term "characteristic points indicating the oncoming vehicle 100" means, for example, light spots 102 having a predetermined light intensity or higher that appears in an area where the headlamp of the oncoming vehicle 100 is estimated to be located (see Fig. 3). Similarly, the situation analyzer 16 maintains characteristic points indicating the pedestrian 200 and other targets. In the case the image data of the low-speed camera 38 includes data indicating these characteristic points, the situation analyzer 16 recognizes the position of the target corresponding to the characteristic points. The detection result of the situation analyzer 16, i.e., a signal indicating target information on the target in front of the driver's vehicle is transmitted to the lamp controller 18.

The lamp controller 18 determines a particular target, detect the displacement of the particular target, sets a particular individual area R1, sets the illuminance value of light to illuminate each individual area R, etc., by using the detection result(s) of the brightness analyzer 14 and/or the situation analyzer 16. By way of one example, the lamp controller 18 includes a tracking unit 40 and an illuminance setting unit 42.

The tracking unit 40 determines a particular target from among the targets detected by the situation analyzer 16. The tracking unit 40 also detects the displacement of the particular target based on the detection result of the brightness analyzer 14. In this embodiment, the oncoming vehicle 100 is determined to be a particular target by way of one example.

More specifically, the tracking unit 40 synthesizes the detection result of the brightness analyzer 14 and the detection result of the situation analyzer 16. The tracking unit 40 associates the brightness of the individual area R detected by the brightness analyzer 14, where the light spots 102 of the oncoming vehicle 100 (particular target) are located, with the oncoming vehicle 100. The tracking unit 40 can detect the displacement of the oncoming vehicle 100 (particular target), by referring to the detection result of the brightness analyzer 14 subsequently acquired and recognizing therein the position of the brightness associated with the oncoming vehicle 100. The tracking unit 40 performs a process of determining a particular target every 50 ms, for example. The tracking unit 40 also performs a process of detecting the displacement (tracking) of the particular target every 0.1-0.5 ms, for example.

The illuminance setting unit 42 defines the illuminance value of light to illuminate each individual area R, based on the detection result of the brightness analyzer 14 and the detection result of the tracking unit 40. The illuminance setting unit 42 defines a particular illuminance value for the particular individual area R1, among the individual areas R, that is determined by the position where the particular target is located.

More specifically, the illuminance setting unit 42 first defines a particular individual area R1 based on the position where the oncoming vehicle 100 (particular target) is located. For example, the illuminance setting unit 42 defines the particular individual area R1 based on the information on the position of the oncoming vehicle 100 included in the detection result of the tracking unit 40. To set the particular individual area R1, the illuminance setting unit 42 defines a perpendicular distance b (see Fig. 3) having a predefined proportion relative to a horizontal distance a (see Fig. 3) between the two light spots 102 corresponding to the headlamp of the oncoming vehicle 100 and defines an individual area R overlapping a range defined by the horizontal dimension a×the vertical dimension b as the particular individual area R1 (see Fig. 3). The particular individual are R1 includes an individual area R overlapping the driver of the oncoming vehicle. The illuminance setting unit 42 defines a particular illuminance value for the particular individual area R1. For example, a particular illuminance value 0 is set.

The illuminance setting unit 42 also defines the illuminance value for the individual areas R other than the particular individual area R1 based on the detection result of the brightness analyzer 14. The illuminance setting unit 42 according to this embodiment performs edge enhancement control when setting the illuminance value for the individual areas R other than the particular individual area R1. In edge enhancement control, the illuminance value for each individual area R is set according to the brightness detected by the brightness analyzer 14, and an enhanced-edge light distribution pattern is determined accordingly.

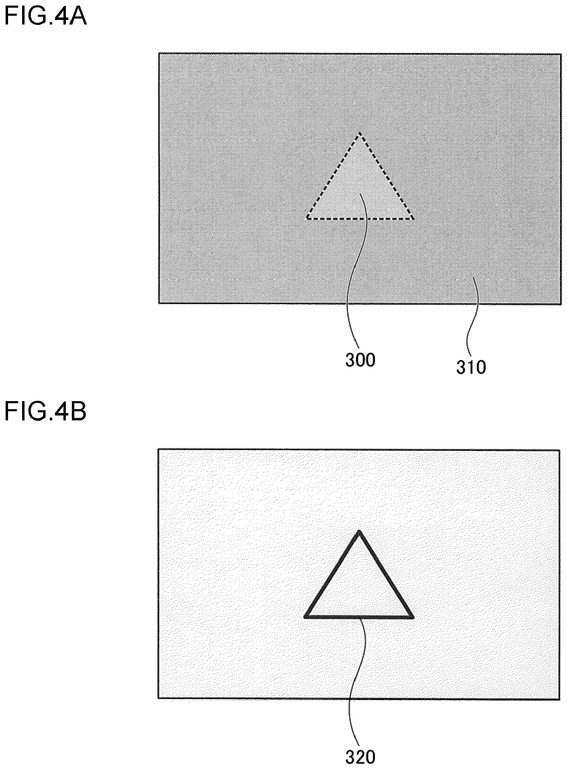

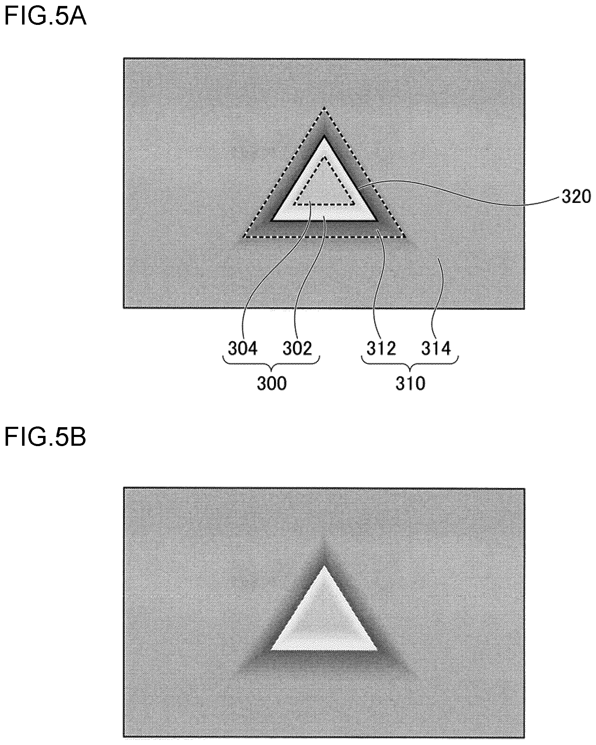

Fig. 4A is a schematic diagram showing brightness image data generated by the brightness analyzer. Fig. 4B is a schematic diagram showing a boundary between a high-brightness area and a low-brightness area. Figs. 5A and 5B are schematic diagrams for illustrating edge enhancement control according to the embodiment. Figs. 5A and 5B schematically show brightness image data generated by the brightness analyzer 14 while an enhanced edge light distribution pattern is being formed by the light source unit 10. Fig. 5B is a view that results when the reference symbols, the broken lines showing the boundary between the edge portion and the internal area, and the solid lines showing a boundary 320 are removed from Fig. 5A.

As shown in Fig. 4A, the illuminance setting unit 42 first detects a high-brightness area 300 and a low-brightness area 310 adjacent to each other based on the detection result of the brightness analyzer 14. In other words, the illuminance setting unit 42 defines the high-brightness area 300 and the low-brightness area 310 adjacent to each other in the brightness image data detected by the brightness analyzer 14. The high-brightness area 300 is an area brighter than the low-brightness area 310. The low-brightness area 310 is an area less bright than the high-brightness area 300. For example, the high-brightness area 300 is formed as a result of the light of the light source unit 10 being reflected by the target. The low-brightness area 310 is formed by the background of the target. Since the quantity of light reflected by the background is smaller than that of the target, the individual area R overlapping the background is less bright than the high-brightness area 300. The high-brightness area 300 may be an area having a predetermined area or larger. Subsequently, as shown in Fig. 4B, the illuminance setting unit 42 derives the boundary 320 between the high-brightness area 300 and the low-brightness area 310.

Subsequently, as shown in Fig. 5A and 5B, the illuminance setting unit 42 defines an area in the high-brightness area 300 within a predetermined distance from the boundary 320 as a high-brightness edge portion 302. The illuminance setting unit 42 further defines an area more distanced from the boundary 320 than the high-brightness edge portion 302 as a high-brightness inward area 304. Further, the illuminance setting unit 42 defines an area in the low-brightness area 310 within a predetermined distance from the boundary 320 as a low-brightness edge portion 312 and defines an area more distanced from the boundary 320 than the low-brightness edge portion 312 as a low-brightness inward area 314. Therefore, the high-brightness edge portion 302 and the low-brightness edge portion 312 are arranged across the boundary 320, and the high-brightness inward area 304 and the low-brightness inward area 314 are arranged across the high-brightness edge portion 302, the boundary 320, and the low-brightness edge portion 312. In other words, starting on the side of the high-brightness inward area 304, the high-brightness edge portion 302, the boundary 320, and the low-brightness edge portion 312 are arranged in the stated order in an area sandwiched by the high-brightness inward area 304 and the low-brightness inward area 314. The "predetermined distance" can be set as appropriate based on an experiment or simulation by the designer.

The illuminance setting unit 42 sets the illuminance value for each individual area R to increase a brightness difference between the high-brightness edge portion 302 and the low-brightness edge portion 312 along the boundary 320. According to illuminance value setting that increases a brightness difference between the high-brightness edge portion 302 and the low-brightness edge portion 312, an enhanced edge light distribution pattern that enhances the boundary 320 is formed in front of the driver's vehicle. Since the edge of the target located in front of the driver's vehicle is enhanced by forming an enhanced edge light distribution pattern, it is easy for the driver to view the target.

The illuminance setting unit 42 according to the embodiment sets the illuminance value so that the brightness of the high-brightness edge portion 302 is higher than the brightness of the high-brightness inward area 304, and the brightness of the low-brightness edge portion 312 is lower than the brightness of the low-brightness inward area 314. By increasing the brightness of the high-brightness edge portion 302, the brightness difference from the low-brightness edge portion 312 is increased. Further, by decreasing the brightness of the low-brightness edge portion 312, the brightness difference from the high-brightness edge portion 302 is increased. Further, by combining both measures, the brightness difference is further increased.

Further, the boundary 320 is further enhanced by configuring the brightness of the high-brightness edge portion 302 to be higher than that of the high-brightness inward area 304 instead of increasing the brightness of the high-brightness area 300 as a whole. Further, the boundary 320 is further enhanced by configuring the brightness of the low-brightness edge portion 312 to be lower than that of the low-brightness inward area 314 instead of decreasing the brightness of the low-brightness area 310 as a whole. Further, by combining both measures, the boundary 320 is further enhanced.

By way of one example, the illuminance setting unit 42 causes, at the outset of edge enhancement control, the light source unit 10 to form a brightness-independent light distribution pattern that does not depend on the detection result of the brightness analyzer 14, for all individual areas R other than the particular individual area R1. The brightness-independent light distribution pattern is a constant illuminance light distribution pattern in which, for example, the illuminance for all individual areas R other than the particular individual area R1 is set to the same predetermined value (hereinafter, conveniently referred to as reference illuminance value). The brightness of each individual area R obtained while the brightness-independent light distribution pattern is being formed is used to form the enhanced edge light distribution pattern. In the case an ordinary lamp unit publicly known in the art is further provided in addition to the light source unit 10, that lamp unit may be used to form the brightness-independent light distribution pattern at the outset of edge enhancement control.

When forming the enhanced edge light distribution pattern, the illuminance setting unit 42 configures the illuminance value for the individual area R overlapping the high-brightness edge portion 302 to be larger than the reference illuminance value in the brightness-independent light distribution pattern. Further, the illuminance setting unit 42 configures the illuminance value for the individual area R overlapping the low-brightness edge portion 312 to be lower than the reference illuminance value. The illuminance value for the individual areas R overlapping the high-brightness inward area 304 and the low-brightness inward area 314 is configured to be the reference illuminance value. This allows the brightness of the high-brightness edge portion 302 to be higher than the brightness of the high-brightness inward area 304 and also allows the brightness of the low-brightness edge portion 312 to be lower than the brightness of the low-brightness inward area 314. The amount of increase in the illuminance value for the high-brightness edge portion 302 and the amount of decrease in the illuminance value for the low-brightness edge portion 312 can be set as appropriate based on an experiment or simulation by the designer.

Subsequently, the brightness of each individual area R obtained while the enhanced edge light distribution pattern is being formed is used to form a new enhanced edge light distribution pattern. When, for example, the target forming the high-brightness area 300 moves, the light that had illuminated the high-brightness edge portion 302 before the movement will no longer be reflected by the target, with the result that the high-brightness edge portion 302 before the movement will be in the low-brightness area 310. Meanwhile, the light that had illuminated the low-brightness edge portion 312 before the moment will be reflected by the target that has moved, with the result that the low-brightness edge portion 312 before the movement will be in the high-brightness area 300. Therefore, the illuminance setting unit 42 can set the boundary 320, keeping track of the movement of the target.

Detection of the high-brightness area 300 and the low-brightness area 310, detection of the boundary 320, and setting of the high-brightness edge portion 302, the high-brightness inward area 304, the low-brightness edge portion 312, and the low-brightness inward area 314 can be performed by using a method publicly known in the art.

Further, the illuminance setting unit 42 recognizes the displacement of the particular individual area R1 and updates the information on the position of the particular individual area R1, based on the detection result of the tracking unit 40. The illuminance setting unit 42 updates the illuminance value of light to illuminate each individual area R. In other words, the illuminance setting unit 42 defines a particular illuminance value for the new particular individual area R1 and determines a new enhanced edge light distribution pattern for illuminating the rest of the individual areas R. The process by the tracking unit 40 and the process by the illuminance setting unit 42 are performed in parallel at least temporarily. The illuminance setting unit 42 transmits a signal indicating the illuminance value for each individual area R to the light source controller 20. The illuminance setting unit 42 sets the illuminance value every 0.1-5 ms, for example.

The light source controller 20 controls the light source unit 10 based on the illuminance value defined by the illuminance setting unit 42. The light source controller 20 controls the light source 22 to turn it on or off and controls on/of switching of each mirror element 30. The light source controller 20 controls the proportion (width or density) of the on-period of each mirror element 30, based on the illuminance value of light to illuminate each individual area R. This allows independent adjustment of the illuminance of light to illuminate each individual area R. Sets of a plurality of partial illuminated areas form various light distribution patterns. The light source controller 20 transmits a drive signal to the light source 22 and/or the light deflector 26 every 0.1-5 ms, for example.

The vehicle lamp system 1 performs adaptive driving beam (ADB) control for forming an optimum light distribution pattern in accordance with the position of the particular target in front of the driver's vehicle. By way of one example, the illuminance setting unit 42 sets a particular illuminance value "0" for the particular individual area R1 determined by the position where the oncoming vehicle 100 is located and sets an illuminance value "1" for the other individual areas R. This setting will be referred to as the first illuminance information. Further, the illuminance setting unit 42 sets the illuminance value for all individual areas R including the particular individual area R1 according to edge enhancement control. This setting will be referred to as the second illuminance information.

The illuminance setting unit 42 ANDs the first illuminance information and the second illuminance information. This produces illuminance information in which the particular illuminance value for the particular individual area R1 is "0", and the illuminance value for the other individual areas R is defined according to edge enhancement control. In other words, light is shielded in the particular individual area R1, and the enhanced edge light distribution pattern is formed in the individual areas R other than the particular individual area R1.

In the case the particular target is the pedestrian 200, the particular target brightness value is set to be of value higher than that of the other individual areas R, by way of one example. This makes it possible to illuminate the pedestrian 200 with light having higher illuminance and makes it easy for the driver of the driver's vehicle to view the pedestrian 200. In this case, it is desirable to shield light in the individual area R where the face of the pedestrian 200 is located. The tracking unit 40 can detect the position of the pedestrian 200 by applying a publicly known image process such as edge enhancement to the image data for each individual area R resulting from the detection by the brightness analyzer 14. Edge enhancement may be included in the process performed by the brightness analyzer 14. Alternatively, the pedestrian 200 may be illuminated by the enhanced edge light distribution pattern.

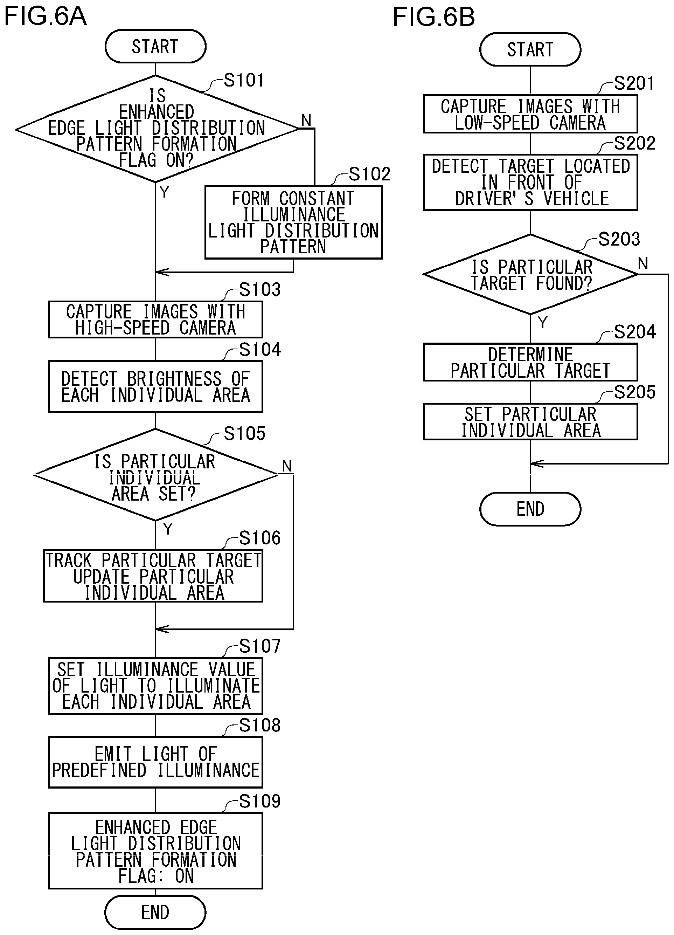

Figs. 6A and 6B are flowcharts showing an example of ADB control performed in the vehicle lamp system according to the embodiment. The flow is repeatedly performed according a predetermined timing schedule when an instruction for performing ADB control is given by using, for example, a light switch (not shown) and when the ignition is turned on. The flow is terminated when the instruction for performing ADB control is canceled (or an instruction for stop is given) or when the ignition is turned off. Further, the flow shown in Fig. 6A is a high-speed process repeated every 0.1-5 ms, for example, and the flow shown in Fig. 6B is a low-speed process repeated every 50 ms, for example. The low-speed process and the high-speed process are performed in parallel.

As shown in Fig. 6A, a determination is first made as to whether an enhanced edge light distribution pattern formation flag is on in the high-speed process (S101). The determination is made by, for example, the illuminance setting unit 42. When the enhanced edge light distribution pattern formation flag is on (Y in S101), it indicates that the enhanced edge light distribution pattern is being formed. In this case, the scene in front of the driver's vehicle is imaged by the high-speed camera 36 (S103) When the enhanced edge light distribution pattern formation flag is not on (N in S101), the constant illuminance light distribution pattern is formed (S102), and then the scene in front of the driver's vehicle is imaged by the high-speed camera 36 (S103).

Subsequently, the brightness analyzer 14 detects the brightness of each individual area R based on the image data of the high-speed camera 36 (S104). A determination is then made as to whether the particular individual area R1 is set (S105). The determination is made by, for example, the tracking unit 40. When the particular individual area R1 is set (Y in S105), the tracking unit 40 tracks the particular target to detect the position (displacement) of the particular individual area R1. The illuminance setting unit 42 updates the setting (position information) of the particular individual area R1 based on the detection result of the tracking unit 40 (S106).

Subsequently, the illuminance setting unit 42 sets the illuminance value of light to illuminate the individual areas R other than the particular individual area R1 according to edge enhancement control (S107). The particular illuminance value is set for the particular individual area R1. Subsequently, the light source controller 20 drives the light source unit 10, and the light of a predefined illuminance is emitted from the light source unit 10 (S108). The illuminance setting unit 42 turns the enhanced edge light distribution pattern formation flag on (S109), and the routine is terminated. When the particular individual area R1 is not set (N in S105), the illuminance setting unit 42 sets the illuminance value of light to illuminate each individual area R (S106). In this case, the illuminance values set do not include the particular illuminance value. Subsequently, steps S107, S108, and S109 are performed, and the routine is terminated.

If the disappearance of the particular target is detected as a result of tracking in step S106, the setting of the particular individual area R1 is also deleted. Therefore, the illuminance values set in step S107 will not include the particular illuminance value. In step S105 in the next routine, it is determined that the particular individual area R1 is not set (N in S105) until step S205 described later is performed.

As shown in Fig. 6B, the scene in front of the driver's vehicle is first imaged by the low-speed camera 38 in the low-speed process (S201). Subsequently, the situation analyzer 16 detects targets located in front of the driver's vehicle based on the image data of the low-speed camera 38 (S202). A determination is then made as to whether the detected targets include the particular target (S203). The determination is made by, for example, the tracking unit 40.

When the particular target is included (Y in S203), the tracking unit 40 determines the particular target (S204). Subsequently, the illuminance setting unit 42 sets the particular individual area R1 based on the position where the particular target is located (S205), whereupon the routine is terminated. When the particular target is not included (N in S203), the routine is terminated. According to the flowchart described above, the particular individual area is set in the low-speed process, but the setting may be made in the high-speed process.

As described above, the vehicle lamp system 1 according to the embodiment includes an imaging unit 12, a brightness analyzer 14, an illuminance setting unit 42, a light source unit 10, and a light source controller 20. The brightness analyzer 14 detects the brightness of each of a plurality of individual areas R arranged in front of the driver's vehicle, based on the information obtained from the imaging unit 12 that images the scene in front of the driver's vehicle. The illuminance setting unit 42 defines the illuminance value of light to illuminate each individual area R, based on the detection result of the brightness analyzer 14. The light source controller 20 controls the light source unit 10 capable of adjusting independently the illuminance of light to illuminate each individual area R, based on the illuminance value defined by the illuminance setting unit 42.

The illuminance setting unit 42 detects the high-brightness area 300 and the low-brightness area 310 adjacent to each other based on the detection result of the brightness analyzer 14. The illuminance setting unit 42 sets the illuminance value to increase a brightness difference between the high-brightness edge portion 302 and the low-brightness edge portion 312 along the boundary 320 between the high-brightness area 300 and the low-brightness area 310, thereby enhancing the boundary 320. By enhancing the boundary 320 between the high-brightness area 300 and the low-brightness area 310, the viewability for the driver can be improved. As a result, the driver can recognize an obstacle ahead more properly, and the safety of driving is improved. Further, the image data of the low-speed camera 38 is acquired while the enhanced edge light distribution pattern is being formed. This allows the situation analyzer 16 to detect the target with a higher precision.

Further, edge enhanced control is performed by using only the brightness information on each individual area R. Therefore, the enhanced edge light distribution pattern can be updated at a high speed. Accordingly, it is possible to allow the enhanced edge light distribution pattern to keep track of a change in the situation in front of the driver's vehicle with a high precision.

Further, the illuminance setting unit 42 sets the illuminance value so that the brightness of the high-brightness edge portion 302 is higher than the brightness of the high-brightness inward area 304, and the brightness of the low-brightness edge portion 312 is lower than the brightness of the low-brightness inward area 314. This increases the brightness difference between the high-brightness edge portion 302 and the low-brightness edge portion 312 as compared with the case of merely increasing the brightness of the high-brightness edge portion 302 or the case of merely decreasing the brightness of the low-brightness edge portion 312. Further, the boundary 320 is more enhanced than in the case of increasing the brightness of the high-brightness area 300 as a whole or the case of decreasing the brightness of the low-brightness area 310 as a whole. As a result, the viewability for the driver can be enhanced further.

Further, the vehicle lamp system 1 includes the situation analyzer 16 and the tracking unit 40. The situation analyzer 16 detects a target located in front of the driver's vehicle. The tracking unit 40 determines a particular target from among the targets detected by the situation analyzer 16 and detects the deviation of the particular target based on the detection result of the brightness analyzer 14. The illuminance setting unit 42 defines the illuminance values for the individual areas R, including the particular illuminance value for the particular individual area R1 determined by the position where the particular target is located, based on the detection result of the brightness analyzer 14 and the detection result of the tracking unit 40.

The situation analyzer 16 can detect a target with a high precision but requires a relatively long period of time for image processing and so is poor in analysis speed. Therefore, if ADB control is performed based only on the analysis result of the situation analyzer 16, it is possible, given that the particular target is an oncoming vehicle 100, to form a light distribution pattern that offers increased viewability for the driver of the driver's vehicle by narrowing a shielded light area in which light is shielded, but it is difficult to cause the shielded light area to keep track of the displacement of the oncoming vehicle 100 with a high precision.

Meanwhile, the brightness analyzer 14 that performs simple brightness detection requires a relatively short period of time for image processing and so is capable of high-speed analysis. However, the precision of detecting a target is low so that it is difficult to know the position where the target is located properly. For this reason, execution of ADB control based only on the detection result of the brightness analyzer 14 requires setting a wide shielded light area in the light distribution pattern and sacrifices viewability for the driver of the driver's vehicle.

By way of contrast, the vehicle lamp system 1 according to the embodiment uses the situation analyzer 16, which is a low-speed but advanced image analysis means, and the brightness analyzer 14, which is a simple but high-speed image analysis means, in combination to keep track of the position where the oncoming vehicle 100 is located with a high precision and to determine a light distribution pattern accordingly. Consequently, the precision of illumination with light in the vehicle lamp 2, i.e., the precision of formation of a light distribution pattern can be increased. As a result, the requirement to avoid glare experienced by the driver of the oncoming vehicle 100 and the requirement to secure viewability for the driver of the driver's vehicle are met at a higher level.

Further, the imaging unit 12 according to the embodiment includes the high-speed camera 36 and the low-speed camera 38. The brightness analyzer 14 detects the brightness based on the information obtained from the high-speed camera 36. Further, the situation analyzer 16 detects the target based on the information obtained from the low-speed camera 38. Thus, by assigning the cameras to the brightness analyzer 14 and the situation analyzer 16 respectively, the camera specialized for performance required for the respective image analysis can be employed. Generally, the camera provided with performance required for image analysis in the brightness analyzer 14 plus the situation analyzer 16 is expensive. According to the embodiment, therefore, the cost of the imaging unit 12 can be reduced, and the cost of the vehicle lamp system 1 can be reduced ultimately.

According to the embodiment, control for determination of the particular illuminance value for the particular individual area R1 and edge enhancement control are combined. Alternatively, edge enhancement control may be performed alone.

The present invention is not limited to the embodiment described above, and modifications such as design changes may be made based on the knowledge of a skilled person. Embodiments resulting from such modification are also encompassed by the scope of the present invention. A new embodiment created by a combination of the embodiment described above and a variation will provide the combined advantages of the embodiment and the variation as combined.

### (Variation 1)

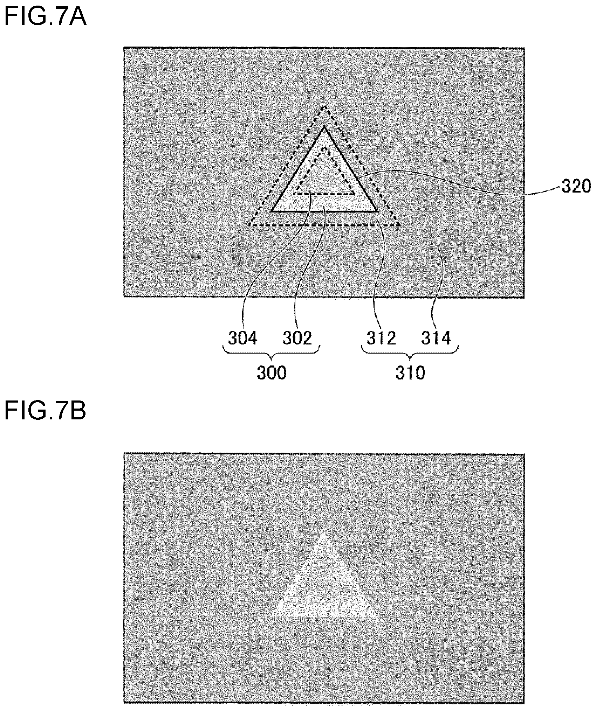

In edge enhancement control described in the embodiment, increase in the brightness of the high-brightness edge portion 302 and decrease in the brightness of the low-brightness edge portion 312 are combined. In an alternative example of edge enhancement control, the illuminance setting unit 42 may set the illuminance value for each individual area R as follows. Figs. 7A and 7B are schematic diagrams for illustrating edge enhancement control according to variation 1. Figs. 7A and 7B schematically show brightness image data generated by the brightness analyzer 14 while the enhanced edge light distribution pattern is being formed by the light source unit 10. Fig. 7B is a view that results when the reference symbols, the broken lines showing the boundary between the edge portion and the internal area, and the solid lines showing the boundary 320 are removed from Fig. 7A.

In other words, the illuminance setting unit 42 first defines the high-brightness area 300 and the low-brightness area 310 and derives the boundary 320, as in the embodiment. Subsequently, the illuminance setting unit 42 sets the illuminance value for each individual area R to increase a brightness difference between the high-brightness edge portion 302 and the low-brightness edge portion 312 along the boundary 320. In this variation, the illuminance setting unit 42 sets the illuminance value so that the brightness of the high-brightness edge portion 302 is higher than the brightness of the high-brightness inward area 304. By increasing the brightness of the high-brightness edge portion 302, the brightness difference from the low-brightness edge portion 312 is increased. Further, the boundary 320 is further enhanced by configuring the brightness of the high-brightness edge portion 302 to be higher than that of the high-brightness inward area 304 instead of increasing the brightness of the high-brightness area 300 as a whole. The illuminance value for the low-brightness edge portion 312 is maintained unchanged.

By way of one example, the illuminance setting unit 42 configures the illuminance value for the individual area R overlapping the high-brightness edge portion 302 to be larger than the reference illuminance value of the brightness independent light distribution pattern. The illuminance value for the individual areas R overlapping the high-brightness inward area 304, the low-brightness edge portion 312, and the low-brightness inward area 314 is configured to be the reference illuminance value. This allows the brightness of the high-brightness edge portion 302 to be higher than the brightness of the high-brightness inward area 304. In this variation, determination of the low-brightness edge portion 312 and the low-brightness inward area 314 may be omitted. In this way, edge enhancement control can be simplified. In this variation, illuminance value setting that decreases the brightness of the low-brightness area 310 as a whole may be combined. In this way, the boundary 320 is further enhanced.

### (Variation 2)

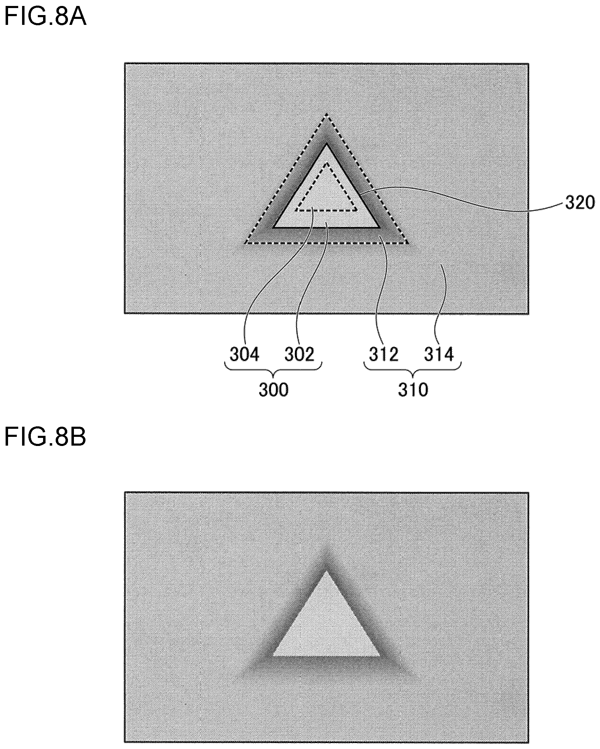

In another example of edge enhancement control, the illuminance setting unit 42 may set the illuminance value for each individual area R as follows. Figs. 8A and 8B are schematic diagrams for illustrating edge enhancement control according to variation 2. Figs. 8A and 8B schematically show brightness image data generated by the brightness analyzer 14 while the enhanced edge light distribution pattern is being formed by the light source unit 10. Fig. 8B is a view that results when the reference symbols, the broken lines showing the boundary between the edge portion and the internal area, and the solid lines showing the boundary 320 are removed from Fig. 8A.

In other words, the illuminance setting unit 42 first defines the high-brightness area 300 and the low-brightness area 310 and derives the boundary 320, as in the embodiment. Subsequently, the illuminance setting unit 42 sets the illuminance value for each individual area R to increase a brightness difference between the high-brightness edge portion 302 and the low-brightness edge portion 312 along the boundary 320. In this variation, the illuminance setting unit 42 sets the illuminance value so that the brightness of the low-brightness edge portion 312 is lower than the brightness of the low-brightness inward area 314. By decreasing the brightness of the low-brightness edge portion 312, the brightness difference from the high-brightness edge portion 302 is increased. Further, the boundary 320 is further enhanced by configuring the brightness of the low-brightness edge portion 312 to be lower than that of the low-brightness inward area 314 instead of decreasing the brightness of the low-brightness area 310 as a whole. The illuminance value for the high-brightness inward area 304 is maintained unchanged.

By way of one example, the illuminance setting unit 42 configures the illuminance value for the individual area R overlapping the low-brightness edge portion 312 to be smaller than the reference illuminance value of the brightness independent light distribution pattern. The illuminance value for the individual areas R overlapping the high-brightness edge portion 302, the high-brightness inward area 304, and the low-brightness inward area 314 is configured to be the reference illuminance value. This allows the brightness of the low-brightness edge portion 312 to be lower than the brightness of the low-brightness inward area 314. In this variation, determination of the high-brightness edge portion 302 and the high-brightness inward area 304 may be omitted. In this way, edge enhancement control can be simplified. In this variation, illuminance value setting that increases the brightness of the high-brightness area 300 as a whole may be combined. In this way, the boundary 320 is further enhanced.

### (Other variations)

In the embodiment and the variations, the imaging unit 12, the brightness analyzer 14, the situation analyzer 16, the lamp controller 18, and the light source controller 20 are provided in the lamp chamber 8, but each of them may be provided outside the lamp chamber 8. For example, an existing camera mounted in the vehicle interior can be used as the low-speed camera 38 of the imaging unit 12. It is desired that the imaging unit 12 and the light source unit 10 have the same angle of field.

Further, if the high-speed camera 36 has the same resolution as the low-speed camera 38, the low-speed camera 38 may be omitted. This reduces the size of the vehicle lamp system 1. In this case, the situation analyzer 16 uses the image data of the high-speed camera 36 to detect a target. The light source unit 10 may be provided with a scanning optical system for scanning the space in front of the driver's vehicle with the light of a light source or an LED array including an array of LEDs corresponding to the respective individual areas R, instead of the DMD as the light deflector 26.

The following modes are also covered by the present invention.

A controller 50 for a vehicle lamp 2, including:
a brightness analyzer 14 that detects a brightness of each of a plurality of individual areas R arranged in front of a driver's vehicle;
an illuminance setting unit 42 that defines an illuminance value of light to illuminate each individual area R, based on a detection result of the brightness analyzer 14; and
a light source controller 20 that controls a light source unit 10 capable of adjusting an illuminance of light to illuminate each individual area R independently, based on the illuminance value defined by the illuminance setting unit 42, wherein
the illuminance setting unit 42 detects a high-brightness area 300 and a low-brightness area 310 adjacent to each other, based on a detection result of the brightness analyzer 14, and sets the illuminance value to increase a brightness difference between a high-brightness edge portion 302 and a low-brightness edge portion 312 along a boundary 320 between the high-brightness area 300 and the low-brightness area 310, thereby enhancing the boundary 320.

A method of controlling a vehicle lamp 2, including:
detecting a brightness of each of a plurality of individual areas R arranged in front of a driver's vehicle;
defining an illuminance value of light to illuminate each individual area R, based on the brightness detected; and
illuminating each individual area R with light based on the illuminance value defined, wherein
in the defining of the illuminance value, a high-brightness area 300 and a low-brightness area 310 adjacent to each other are detected based on a result of detecting the brightness, and the illuminance value is set to increase a brightness difference between a high-brightness edge portion 302 and a low-brightness edge portion 312 along a boundary 320 between the high-brightness area 300 and the low-brightness area 310, thereby enhancing the boundary 320.

### [REFERENCE SIGNS LIST]

1 vehicle lamp system, 2 vehicle lamp, 10 light source unit, 12 imaging unit, 14 brightness analyzer, 20 light source controller, 42 illuminance setting unit, 50 controller, 300 high-brightness area, 302 high-brightness edge portion, 304 high-brightness inward area, 310 low-brightness area, 312 low-brightness edge portion, 314 low-brightness inward area, 320 boundary

### [INDUSTRIAL APPLICABILITY]

The present invention relates to a vehicle lamp system, a controller for a vehicle lamps, and a method of controlling vehicle lamps.

## Claims

1. A vehicle lamp system comprising:
an imaging unit that images a scene in front of a driver's vehicle;
a brightness analyzer that detects a brightness of each of a plurality of individual areas arranged in front of the driver's vehicle, based on information obtained from the imaging unit;
an illuminance setting unit that defines an illuminance value of light to illuminate each individual area, based on a detection result of the brightness analyzer;
a light source unit capable of adjusting an illuminance of light to illuminate each of the plurality of individual areas independently; and
a light source controller that controls the light source unit based on the illuminance value defined by the illuminance setting unit, wherein
the illuminance setting unit detects a high-brightness area and a low-brightness area adjacent to each other based on the detection result of the brightness analyzer and sets the illuminance value to increase a brightness difference between a high-brightness edge portion and a low-brightness edge portion along a boundary between the high-brightness area and the low-brightness area, thereby enhancing the boundary.

2. The vehicle lamp system according to claim 1,
wherein
the illuminance setting unit sets the illuminance value so that a brightness of the high-brightness edge portion is higher than a brightness of a high-brightness inward area in the high-brightness area more distanced from the boundary than the high-brightness edge portion.

3. The vehicle lamp system according to claim 1,
wherein
the illuminance setting unit sets the illuminance value so that a brightness of the low-brightness edge portion is lower than a brightness of a low-brightness inward area in the low-brightness area more distanced from the boundary than the low-brightness edge portion.

4. The vehicle lamp system according to claim 1,
wherein
the illuminance setting unit sets the illuminance value so that a brightness of the high-brightness edge portion is higher than a brightness of a high-brightness inward area in the high-brightness area more distanced from the boundary than the high-brightness edge portion and that a brightness of the low-brightness edge portion is lower than a brightness of a low-brightness inward area in the low-brightness area more distanced from the boundary than the low-brightness edge portion.

5. A controller for a vehicle lamp, comprising:
a brightness analyzer that detects a brightness of each of a plurality of individual areas arranged in front of a driver's vehicle;
an illuminance setting unit that defines an illuminance value of light to illuminate each individual area, based on a detection result of the brightness analyzer; and
a light source controller that controls a light source unit capable of adjusting an illuminance of light to illuminate each individual area independently, based on the illuminance value defined by the illuminance setting unit, wherein
the illuminance setting unit detects a high-brightness area and a low-brightness area adjacent to each other, based on a detection result of the brightness analyzer, and sets the illuminance value to increase a brightness difference between a high-brightness edge portion and a low-brightness edge portion along a boundary between the high-brightness area and the low-brightness area, thereby enhancing the boundary.

6. A method of controlling a vehicle lamp, comprising
detecting a brightness of each of a plurality of individual areas arranged in front of a driver's vehicle;
defining an illuminance value of light to illuminate each individual area, based on the brightness detected; and
illuminating each individual area with light based on the illuminance value defined, wherein
in the defining of the illuminance value, a high-brightness area and a low-brightness area adjacent to each other are detected based on a result of detecting the brightness, and the illuminance value is set to increase a brightness difference between a high-brightness edge portion and a low-brightness edge portion along a boundary between the high-brightness area and the low-brightness area, thereby enhancing the boundary.
